Europäisches Patentamt

European Patent Office

Office européen des brevets

(11) Publication number: 0 268 436 B2

(12)

# NEW EUROPEAN PATENT SPECIFICATION

(45) Date of publication of the new patent specification: 19.10.94

(51) Int. Cl.5: **B60C 11/00**

(21) Application number: **87310037.4**

(22) Date of filing: **13.11.87**

---

(54) Low noise tyre.

---

(30) Priority: **17.11.86 JP 274905/86**

(43) Date of publication of application: **25.05.88 Bulletin 88/21**

(45) Publication of the grant of the patent: **04.03.92 Bulletin 92/10**

(45) Mention of the opposition decision: **19.10.94 Bulletin 94/42**

(84) Designated Contracting States: **DE FR GB**

(56) References cited:
EP-A- 0 118 059
GB-A- 2 014 520
US-A- 2 878 852
US-A- 4 503 898

PATENT ABSTRACTS OF JAPAN, vol. 9, no. 303 (M-434)[2026], 30th November 1985; & JP-A-60 139 504 (YOKOHAMA GOMU K.K.) 24-07-1985

PATENT ABSTRACTS OF JAPAN, vol. 9, no. 194 (M-403)[1917], 10th August 1985; & JP-A-60 60 011 (SUMITOMO GOMU KOGYO K.K.) 06-04-1985

(73) Proprietor: **SUMITOMO RUBBER INDUSTRIES LIMITED**
No. 1-1, Tsutsui-cho 1-chome
Chuo-ku Kobe-shi Hyogo 651 (JP)

(72) Inventor: **Kakumu, Kiichiro**
16-7, 8-chome, Sumiyoshiamate
Higashinda-ku
Kobe-shi Hyogo (JP)
Inventor: **Okamura, Sadanori**
5-2, Uenomaru-cho
Miki-shi Hyogo (JP)

(74) Representative: **Stewart, Charles Geoffrey**
**SP TYRES UK LIMITED**
**Tyre Technical Division**
**Fort Dunlop, Erdington, Birmingham B24 9OT**
**(GB)**

EP 0 268 436 B2

**Description**

The present invention relates to a low noise tyre.

In block pattern tyres in which the tread pattern is formed by blocks separated by longitudinal and transverse grooves, air is discharged from and sucked into the grooves as a result of compressions and expansions of the grooves as a result of rolling of the tyre on a road surface. The discharges and suctions cause repeated noises. Further noises include pattern noises or impact noises accompanied by compression waves in the ambient air. These also are caused by the repeated pulsating vibrations generated by the blocks. These noises may also be of the same frequency as resonant frequencies of individual portions of the vehicle and thus be amplified into the vehicle.

In order to reduce these noises, a variable pitch method is known in the art, in which the pitch length of the blocks, i.e. the minimum wave unit of the repeated tread pattern, is varied so as to spread the noises themselves over a broad frequency spectrum thereby to drop the peak noise level and to avoid high peaks in the noises from being further increased by resonance in the noise frequency.

According to this variable pitch method, however, several kinds of blocks having different pitch lengths are arranged in the circumferential direction of the tyre. For example US-A-4503898 discloses a pneumatic tyre comprising at least eight different pitch lengths where at least 60% of all pitches having substantially the same length are placed adjacent to each other and the ratio of longest pitch length to the shortest pitch length is in the range 1.2 to 1.8. However in such variable pitch arrangements if the ratio of the longest pitch to the shortest pitch is excessive a circumferential imbalance is liable to occur in the rigidity of the tread so that the vibratory characteristics during rolling of the tyre are adversely affected and cause eccentric wear in the tyre. If the pitch arrangement is regular, however, the result is that the noises are uncomfortable to the ear.

A known tyre comprising the features of the preamble of claim 1 is shown, e.g. in US-A-4 598 748.

It is, therefore, an object of the present invention to provide a low noise tyre by selecting the number of blocks, the ratio of the pitch lengths of the blocks and the number of the kinds of block groups thereby to disperse the tyre noises over a broad frequency range and give effectively white noise and at the same time avoid the problem of eccentric wear.

According to the present invention, there is provided a low noise tyre having a ground contacting tread comprising the features of claim 1.

Other objects, features and advantages of the present invention will become apparent from the following description of one embodiment by way of example only, described with reference to the accompanying drawings, in which:

Fig.1 is a laid out plan view showing a portion of the tread pattern according to one embodiment of the present invention;

Fig.2 is a diagram showing the arrangement of the blocks of the tread pattern and their groups;

Fig.3 is a graph showing the number of blocks and peak noise level index;

Fig.4 is a graph for explaining the relationship among the pitch length ratio of the blocks, the number of kinds and the peak level index;

Fig.5. is a spectrum showing the result of frequency analysis for the case in which block groups with variable circumferential length are used;

Fig.6. is a spectrum showing the result of frequency analysis for the case in which block groups with equal circumferential length are used;

Fig.7. is a spectrum showing frequency analysis values of the noises of the embodiment of the present invention; and

Fig.8. is a spectrum showing the frequency analysis values of the noises of a prior art tyre for comparison.

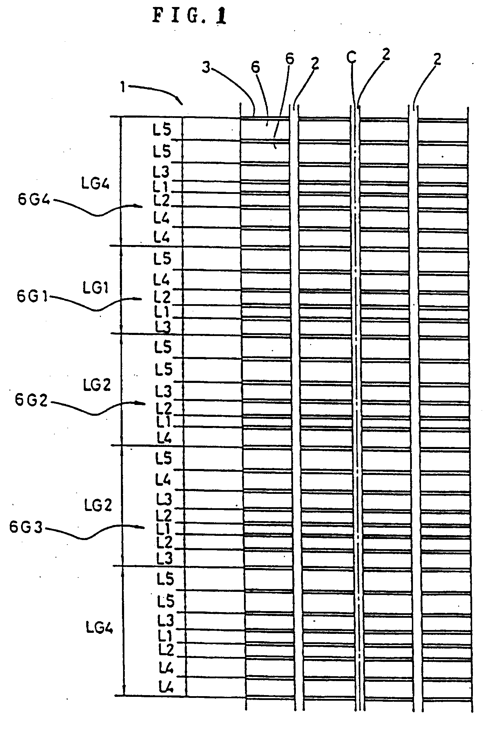

In Fig.1 a tread 1 is formed by three longitudinal grooves 2 extending in the circumferential direction of the tyre to define ribs, and transverse grooves 3 extending through the ribs in the axial direction of the tyre to form blocks 6 arranged in rows. The central longitudinal groove 2 extends along the equator line C of the tyre.

Thus sixty five or more blocks 6 are juxtaposed for each rib around the whole circumference of the tyre.

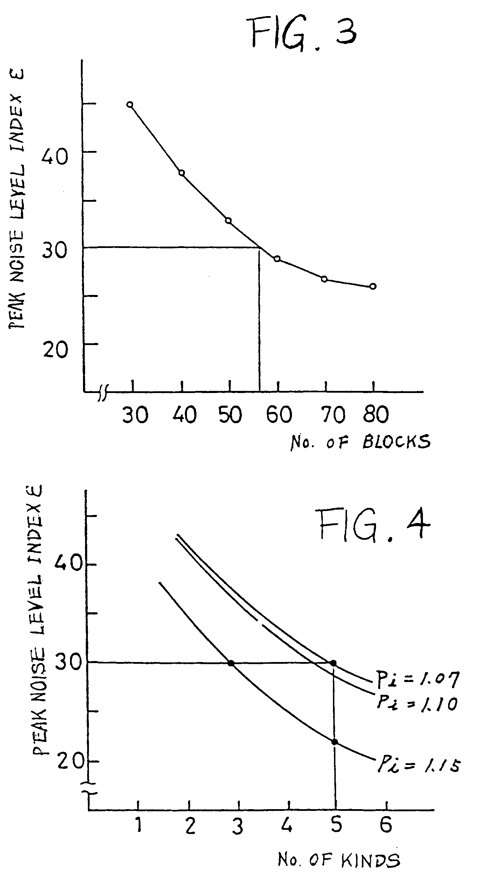

As shown in Fig.3, the peak noise level index of the pitch noises generated for each block 6 reduces with increasing block number N. If the block number N exceeds 65 the degree of dispersion improvement reduces, as shown, towards a minimum level.

The peak noise level is a satisfactory fraction such as 30 if the number N is fifty five or more. It was therefore decided that the block number N should be fifty five or more, or more preferably sixty five or more.

Here, the aforementioned peak noise level index is defined as follows: If the highest sound pressure of the one-dimensional component of the pattern noises which are generated by the tyre tread pattern (i.e. single-pitch pattern) arranged with blocks of equal length around the whole tyre circumference, is 100, the peak noise level index expresses in percentage terms the ratio of that highest sound pressure to that of the one-dimensional component of the pattern noises which are generated by the variable length block tyre tread pattern (e.g. Irregular pitch pattern). The peak noise level index thus defined is calculated by the method of simulating the degree of dispersion of pitch noises through a harmonic analysis in which the arrangements of the blocks with different lengths on the tyre circumference are represented by pulse trains. The maximum of |Hn| calculated by the following equation is defined as the peak noise level index

$$|Hn| = \left| C_0 \sum_{K=1}^{N} W_K \cdot \ell^{i\,\frac{2\pi n}{L_T} X_K} \right|$$

wherein:

|Hn|: an harmonic component of n-th order

Co: a normalisation constant for Hn = 100 at n-single pitch;

Wk: a pulse weighing constant;

$L_T$: a circumferential length of tyre N the total number of blocks; and

Xk: the position of K-th pulse.

In the embodiment the aforementioned blocks 6 are composed of five kinds of circumferential pitch lengths Li. In the tyre tread, moreover, there are juxtaposed in the circumferential direction block groups 6Gj which have circumferential lengths LGj (wherein j = 1, 2, 3, - - -, and so on in the order of smaller length first) in combination of several blocks 6.

Incidentally, the pitch length Li of the blocks 6 is the circumferential length between the centres of the transverse grooves 3 and 3 dividing said blocks 6, and these comprise different pitch lengths Li (i = 1, 2, 3, 4 and 5), as has been described above. Note that the reference characters i = 1 to 5 are arranged in the order of the smaller pitch length first. Furthermore the ratio Pi ( = Li + 1/Li) of the pitch length Li of the first block of the smallest length, is set at a value from 1.1 to 1.2. The ratio Pmax of the maximum pitch length Lmax, i.e. L5 to the minimum pitch length L1 of the blocks 6 is 1.6.

As shown in Fig.4, even if the aforementioned pitch ratio Pi is set at 1.10, the peak noise level index $\epsilon$ can be set at 30 or less by increasing the kinds of the pitch Li of the blocks 6 to 5 or more. Therefore, the number of kinds of the pitch length Li is set at 5 or more. If the number of kinds is 15 or more, however, tyre production is troublesome.

Moreover, the ratio Pi of the pitch length Li of the blocks adjoining in the order of the smaller lengths is set at the aforementioned value from 1.1 to 1.2. If the ratio Pi is smaller than 1.1, as is apparent from Fig.4, the reduction in the peak noise level index $\epsilon$ is not sufficient even when the number of the pitch lengths Li of the blocks 6 is five. If the ratio Pi is larger than 1.2, on the other hand, the difference in the length among the blocks becomes too large to allow the rigidity balance around the tyre tread to be reasonable and eccentric wear of the tyre is caused, thus spoiling the other performance requirements for the tyre.

If the ratio Pmax of the maximum pitch length L5 to the minimum pitch length L1 exceeds 1.9, the one - and two - dimensional components of the pitches of the noise frequency may overlap and this then increases the noise level. As has been described above, therefore, the ratio Pmax of the pitch length has its upper limit set at 1.9.

If the ratio Pmax of the above mentioned pitch lengths is the biquadrate of 1.1, i.e. about 1.46, if the number of kinds of the pitch length Li is 5 and if the already defined ratio Pi is 1.1 or more then the ratio Pmax has its lower limit set at 1.5 or more, as has been described above.

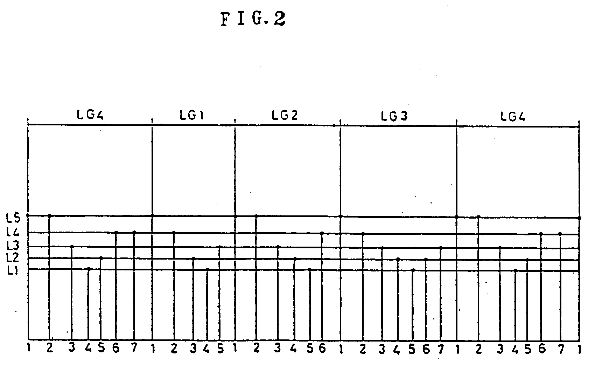

Moreover, the aforementioned block group 6Gj (j = 1, 2, 3, - - -, and so on) is composed of three to five kinds of circumferential length LGj (j = 1, 2, 3, - - -, and so on in the order of the smaller length. The embodiment shown in Figs. 1 and 2 includes four kinds of block groups 6G1, 6G2, 6G3 and 6G4. On the other hand, the ratio PGj (= LGj + 1 /LGj) of the circumferential length $LG_{j+1}$ of the block group $6G_{j+1}$ to the circumferential length LGj of the block group 6Gj is set at the value from 1.2 to 1.5. Moreover, the ratio PGmax of the maximum circumferential length LGmax, i.e. LG4 to the minimum circumferential length LG1, is set at the value from 1.5 to 1.9.

Incidentally in the present embodiment, the block groups 6G4, 6G1, 6G2 and 6G3 having the circumferential lengths LG4, LG1, LG2 and LG3 are repetitively arranged in the recited order in the circumferential direction, as shown in Figs. 1 and 2.

Here, the block group 6Gj is defined, if the aforementioned blocks 6 of five different pitch lengths Li are arranged at random in the circumferential direction of the tyre, as that from the block 6 with the maximum pitch length L5 (or the block with the smallest pitch length L1) to the block 6 with the next maximum pitch length L5 (or the block 6 with the smallest pitch length L1).

Incidentally, the number of the blocks 6 in each block group 6Gj can be freely set. In the embodiment of Figs. 1 and 2, moreover, the blocks groups LG1 and LG4 contain five, six or seven blocks 6 with respectively different lengths.

Incidentally the blocks can be set to form the whole circumference of the tyre by arranging each of the aforementioned block groups 6G1 to 6G4 in the circumferential direction of the tyre. In this instance, the number of the blocks 6 contained in each block group 6Gj becomes large.

Moreover, it has been found that the so-called "wow" noises are caused which offend the ears if the block group is of less than three kinds whereas the peak noise level index drops if the block group is of more than five kinds. In the present embodiment, therefore, there are used the block groups 6G1 to 6G4 having four circumferential lengths LG1 to LG4. Still further the ratio PGj ($= LGj + 1/LGj$) of circumferential lengths LGj of the block groups 6Gj is set at a value from 1.2 to 1.5, as has been described above.

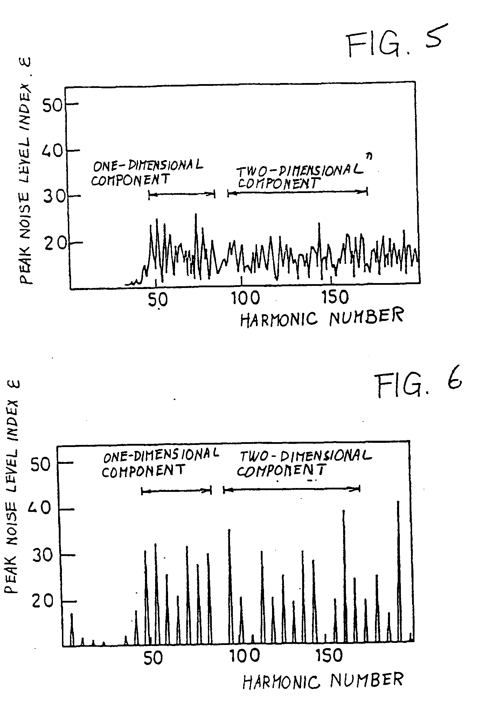

If the circumferential lengths LGj of the block groups 6Gj are identical, prominent peak noises are liable to occur in the one - and two-component dispersion widths of the pitches in the noise frequency, as shown in Fig.6, to drop the peak noise level index $\epsilon$. If the circumferential lengths LGj are made variable, on the contrary, both the one-and two-components can be dispersed to a satisfactory extent, as shown in Fig.5, to change the noise into white ones.

It has also been found as the result of investigations that the peak noise level index $\epsilon$ is large if the aforementioned ratio PGj of circumferential lengths is smaller than 1.2 whereas the length difference becomes excessive to rather drop the peak noise level index $\epsilon$ if the ratio PGj exceeds 1.5.

However, the ratio PGmax, i.e. PG4 of the maximum circumferential length LGmax, i.e. LG4 to the minimum circumferential length LG1 has to be more than the square of 1.2, i.e, more than 1.5 because the aforementioned ratio PGj of the circumferential length LGj is 1.2 or more.

If the aforementioned ratio PGmax exceeds 2.5, moreover, the ratio of the block lengths becomes excessive to make it liable to separate and discriminate the noises of long or short periodic pitch so that the noises are prevented from becoming white noise. Therefore, the ratio of the circumferential lengths and the maximum and minimum values are set at the above specified values.

Incidentally, in the embodiment shown in Fig.1. each block is formed to have the same phase in the circumferential direction for each rib. Despite this fact, however, it is possible to further improve the white noise generation by changing the phase of each block in the circumferential direction.

One specific example will now be described which is a tyre having the size of 185/60R14 and a block pattern as Fig.1 was manufactured with the specifications enumerated in the right hand column of Table 1.

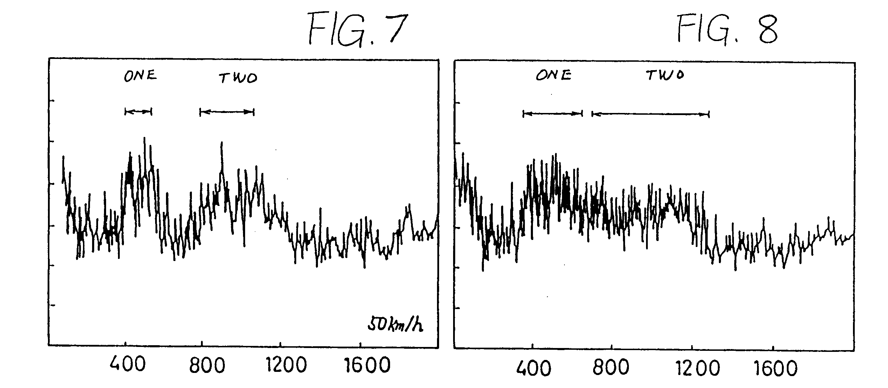

Another tyre having the specifications enumerated in the left hand column was also manufactured for trial by way of comparison. These two tyres were subjected to noise spectrum analysis. The noise measurements were performed by a rotating drum test, and the tyres were rotated under a load near that of service and at a running speed of 50 km/hour. The results of noise measurements of the embodiment are shown in Fig.7, and those of the comparison are shown in Fig.8. These results reveal that the noises in the embodiment of the present invention were spread over a broad frequency spectrum and turned into white noise so that the resultant perceived pattern noise was reduced.

The tyre of the present invention was virtually the same in steering stability and wear resistance to the comparison tyre.

Table 1

|  | COMPARISON | EMBODIMENT |
|---|---|---|
| Number of Blocks | 65 | 65 |
| Number of Kinds of Block Pitch Length | 3 | 5 |
| Pi | 1.15 1.15 | 1.15 1.15<br>1.15 1.15 |
| Pmax | 1.32 | 1.75 |
| Number of Kinds of Circumferential Lengths of Block Groups | 3 | 4 |
| PGi | 1.4 1.4 | 1.3 1.3 1.3 |
| PGmax | 1.96 | 2.20 |

Thus by selecting the kinds of the block pitch lengths, the ratio of the lengths, and the number of kinds of block groups each composed of the blocks according to this invention a lower noise tyre is obtained which disperses the noises over a broad frequency range thereby to change them into white noise so that the offending noises of the tyre can be reduced to improve the comfort of the vehicle in relation to noise levels.

**Claims**

1. A low noise tyre having a ground contacting tread (1) comprising in the circumferential direction at least fifty five tread blocks (6) providing between 5 and 15 different block pitch lengths (Li, i = 1,2,3,4,5... etc in the order of increasing pitch length) and arranged in a plurality of block groups (6Gi) wherein a block group (6Gi) is that from a block (6) with the maximum pitch length (Lmax) via blocks of shorter pitch length to the block (6) with the next maximum pitch length (Lmax) or that from a block (6) with the minimum pitch length (L1) via blocks of larger pitch length to the block (6) with the next minimum pitch length (L1), wherein the ratio Pi of two adjacent block pitch lengths Li + 1 and Li, where Pi = Li + 1/Li, is set at a value from 1.1 to 1.2, and the ratio Pmax of the maximum block pitch length Lmax to the minimum block pitch length L1, where Pmax = Lmax/L1, is set at a value from 1.5 to 1.9, characterised in that the block groups (6Gi) comprise three to five different circumferential lengths (LGj, j = 1,2,3... in the order of increasing circumferential length) and the ratio PGj of adjacent circumferential block group lengths LGj + 1 and LGj, where PGj = LGj + 1/LGj is set at a value from 1.2 to 1.5, and the ratio PGmax of the maximum circumferential block group length LGmax to the minimum circumferential block group length LG1, where PGmax = LGmax/LG1 is set at a value from 1.5 to 2.5.

**Patentansprüche**

1. Reifen mit geringem Laufgeräusch mit einer den Boden berührenden Lauffläche (1) mit in Umfangsrichtung mindestens fünfundfünfzig Laufflächenblöcken (6), die zwischen 5 und 15 verschiedene Block-Pitchlängen (Li, i = 1,2,3,4,, ... usw. geordnet nach zunehmender Pitchlänge) bilden, und die in einer Vielzahl von Blockgruppen (6Gi) angeordnet sind, wobei eine Blockgruppe (6Gi) die von einem Block (6) mit der maximalen Pitchlänge (Lmax) über Blöcke von kürzeren Pitchlängen zu dem Block (6) mit der nächsten maximalen Pitchlänge (Lmax) oder jene von einem Block (6) mit der minimalen Pitchlänge (L1) über Blöcke von größeren Pitchlängen zu dem Block (6) mit der nächsten minimalen Pitchlänge (L1) ist, wobei das Verhältnis Pi zweier benachbarter Block-Pitchlängen Li + 1 und Li, wobei Pi = Li + 1/Li ist, auf einen Wert von 1,1 bis 1,2 gesetzt ist, und das Verhältnis Pmax der maximalen Block-Pitchlänge Lmax zu der minimalen Block-Pitchlänge L1, wobei Pmax = Lmax/L1 ist, auf einen Wert von 1,5 bis 1,9 gesetzt ist, dadurch **gekennzeichnet,** daß die Blockgruppen (6Gi) drei bis fünf verschiedene Umfangslängen (LGj, j = 1,2,3,... geordnet nach zunehmender Umfangslänge) besitzen und das Verhältnis PGj benachbarter Blockgruppenlängen in Umfangsrichtung LGj + 1 und LGj, wobei PGj = LGj + 1/LGj ist, auf einen Wert von 1,2 bis 1,5 gesetzt ist, und das Verhältnis PGmax der maximalen Blockgruppenlänge in Umfangsrichtung LGmax zu der minimalen Blockgruppenlänge in Umfangsrichtung LG1, wobei PGmax := LGmax/LG1 ist, auf einen Wert von 1,5 bis 2,5 gesetzt ist.

**Revendications**

1. Pneumatique peu bruyant ayant une bande de roulement (1) destinée à être au contact du sol et comprenant, dans la direction circonférentielle, au moins cinquante-cinq blocs (6) de bande de roulement formant cinq à quinze pas de blocs (Li, i = 1, 2, 3, 4, 5,...etc. dans l'ordre des pas croissants) et disposés en plusieurs groupes de blocs (6Gi), dans lequel un groupe de blocs (6Gi) est disposé à partir d'un bloc (6) de pas maximal (Lmax) jusqu'au bloc (6) de pas maximal suivant (Lmax) par l'intermédiaire de blocs de pas plus courts, ou à partir d'un bloc (6) de pas minimal (L1) jusqu'au bloc (6) de pas minimal suivant (L1) par l'intermédiaire de blocs de pas plus grands, le rapport Pi de deux pas de blocs adjacents Li + 1 et Li, tel que Pi = Li + 1/Li, est réglé à une valeur comprise entre 1,1 et 1,2, et le rapport Pmax du pas maximal Lmax au pas minimal L1, avec Pmax = Lmax/L1, est réglé à une valeur comprise entre 1,5 et 1,9, caractérisé en ce que les groupes (6Gi) de blocs ont trois à cinq longueurs circonférentielles différentes (LGj, j = 1, 2, 3... dans l'ordre des longueurs circonférentielles croissantes), le rapport PGj des longueurs circonférentielles de groupes de blocs adjacents LGj + 1 et LGj, tel que PGj = LGj + 1/LGj, est réglé à une valeur comprise entre 1,2 et 1,5, et le rapport PGmax de la longueur circonférentielle maximale de groupe de blocs LGmax et de la longueur circonférentielle minimale de groupe de blocs LG1, tel que PGmax = LGmax/LG1, est réglé à une valeur comprise entre 1,5 et 2,5.

# F I G. 1

FIG.2

FIG. 3

FIG. 4

FIG. 5

FIG. 6

FIG. 7

FIG. 8

EP 0 268 436 B2